# EUROPEAN PATENT APPLICATION

(11) **EP 4 071 634 A1**
(43) Date of publication of application: **12.10.2022**
(21) Application number: 21166906.4
(22) Date of filing: 06.04.2021
(51) Int. Cl.: G06F 16/51

(54) **SIMPLIFYING MEDIA CONTENT AND REFRESHING SIMPLIFIED MEDIA CONTENT**

(71) Applicant: Nokia Technologies Oy, 02610 Espoo (FI)
(72) Inventor: LAAKSONEN, Lasse Juhani, Tampere (FI); LEHTINIEMI, Arto Juhani, Lempäälä (FI); VILERMO, Miikka Tapani, Siuro (FI); PULAKKA, Hannu Juhani, Pirkkala (FI)
(74) Representative: Nokia EPO representatives

(57) **Abstract**

A method comprising storing a media content on a storage of a device, determining that a threshold regarding simplifying the media content has been exceeded, simplifying the media content such that data is lost from the storage of the device and a low-quality version of the media content is stored, rendering the low-quality version of the media content, and refreshing the low-quality version of the media content to obtain a higher-quality version of the media content.

## Description

### FIELD

The present application relates to media content and storing media content

### BACKGROUND

Media content may be captured, stored and consumed using mobile devices and optionally also cloud computing. The amount of media content, such as audio-visual content, that is to be stored has been increasing and there are, for example, services that rely on digital audio-visual content, such as entertainment and communication services. Also, the capability of mobile devices to capture and render media content increases and that also increases the required storage space in case the media content is to be stored.

### BRIEF DESCRIPTION

The scope of protection sought for various embodiments is set out by the independent claims. The exemplary embodiments and features, if any, described in this specification that do not fall under the scope of the independent claims are to be interpreted as examples useful for understanding various embodiments of the invention.

According to an aspect there is provided an apparatus comprising means for storing a media content on a storage of a device, determining that a threshold regarding simplifying the media content has been exceeded, simplifying the media content such that data is lost from the storage of the device and a low-quality version of the media content is stored, rendering the low-quality version of the media content, and refreshing the low-quality version of the media content to obtain a higher-quality version of the media content.

According to another aspect there is provided an apparatus comprising at least one processor, and at least one memory including a computer program code, wherein the at least one memory and the computer program code are configured, with the at least one processor, to cause the apparatus to store a media content on a storage of a device, determine that a threshold regarding simplifying the media content has been exceeded, simplify the media content such that data is lost from the storage of the device and a low-quality version of the media content is stored, render the low-quality version of the media content, and refresh the low-quality version of the media content to obtain a higher-quality version of the media content.

According to another aspect there is provided a method comprising storing a media content on a storage of a device, determining that a threshold regarding simplifying the media content has been exceeded, simplifying the media content such that data is lost from the storage of the device and a low-quality version of the media content is stored, rendering the low-quality version of the media content, and refreshing the low-quality version of the media content to obtain a higher-quality version of the media content.

According to another aspect there is provided a computer program comprising instructions for causing an apparatus to perform at least the following: store a media content on a storage of a device, determine that a threshold regarding simplifying the media content has been exceeded, simplify the media content such that data is lost from the storage of the device and a low-quality version of the media content is stored, render the low-quality version of the media content, and refresh the low-quality version of the media content to obtain a higher-quality version of the media content.

According to another aspect there is provided a computer program product comprising instructions for causing an apparatus to perform at least the following: store a media content on a storage of a device, determine that a threshold regarding simplifying the media content has been exceeded, simplify the media content such that data is lost from the storage of the device and a low-quality version of the media content is stored, render the low-quality version of the media content, and refresh the low-quality version of the media content to obtain a higher-quality version of the media content.

According to another aspect there is provided a computer program comprising instructions stored thereon for performing at least the following: store a media content on a storage of a device, determine that a threshold regarding simplifying the media content has been exceeded, simplify the media content such that data is lost from the storage of the device and a low-quality version of the media content is stored, render the low-quality version of the media content, and refresh the low-quality version of the media content to obtain a higher-quality version of the media content.

According to another aspect there is provided a non-transitory computer readable medium comprising program instructions for causing an apparatus to perform at least the following: store a media content on a storage of a device, determine that a threshold regarding simplifying the media content has been exceeded, simplify the media content such that data is lost from the storage of the device and a low-quality version of the media content is stored, render the low-quality version of the media content, and refresh the low-quality version of the media content to obtain a higher-quality version of the media content.

According to another aspect there is provided non-transitory computer readable medium comprising program instructions stored thereon for performing at least the following: store a media content on a storage of a device, determine that a threshold regarding simplifying the media content has been exceeded, simplify the media content such that data is lost from the storage of the device and a low-quality version of the media content is stored, render the low-quality version of the media content, and refresh the low-quality version of the media content to obtain a higher-quality version of the media content.

### BRIEF DESCRIPTION OF THE DRAWINGS

FIG. 1 illustrates an exemplary embodiment of retrieving media content from a could service to a mobile device.
FIG. 2 illustrates an exemplary embodiment of media content simplification.
FIG. 3 illustrates an exemplary embodiment of recording a spatial audio experiment.
FIGS. 4A-4E illustrate how the media content captured in the exemplary embodiment illustrated in FIG. 3 may be simplified.
FIG. 5 illustrates an exemplary embodiment of simplifying based on a threshold regarding context of a media content in addition to time.
FIG. 6 illustrates an exemplary embodiment of contextual refreshing.
FIG. 7 illustrates an exemplary embodiment of distributed content for content simplification purposes.
FIG. 8 illustrates an exemplary embodiment of fast retrieval of a higher-quality version of the media content.
FIG. 9 illustrates an exemplary embodiment of an apparatus 900.

### DETAILED DESCRIPTION

The following embodiments are exemplifying. Although the specification may refer to "an", "one", or "some" embodiment(s) in several locations of the text, this does not necessarily mean that each reference is made to the same embodiment(s), or that a particular feature only applies to a single embodiment. Single features of different embodiments may also be combined to provide other embodiments.

As used in this application, the term 'circuitry' refers to all of the following: (a) hardware-only circuit implementations, such as implementations in only analog and/or digital circuitry, and (b) combinations of circuits and software (and/or firmware), such as (as applicable): (i) a combination of processor(s) or (ii) portions of processor(s)/software including digital signal processor(s), software, and memory(ies) that work together to cause an apparatus to perform various functions, and (c) circuits, such as a microprocessor(s) or a portion of a microprocessor(s), that require software or firmware for operation, even if the software or firmware is not physically present. This definition of 'circuitry' applies to all uses of this term in this application. As a further example, as used in this application, the term 'circuitry' would also cover an implementation of merely a processor (or multiple processors) or a portion of a processor and its (or their) accompanying software and/or firmware. The term 'circuitry' would also cover, for example and if applicable to the particular element, a baseband integrated circuit or applications processor integrated circuit for a mobile phone or a similar integrated circuit in a server, a cellular network device, or another network device. The above-described embodiments of the circuitry may also be considered as embodiments that provide means for carrying out the embodiments of the methods or processes described in this document.

As used herein, the term "determining" (and grammatical variants thereof) can include, not least: calculating, computing, processing, deriving, measuring, investigating, looking up (e.g., looking up in a table, a database or another data structure), ascertaining and the like. Also, "determining" can include receiving (e.g., receiving information), accessing (e.g., accessing data in a memory), obtaining and the like. Also, "determining" can include resolving, selecting, choosing, establishing, and the like.

Mobile devices, such as mobile phones, wearable devices, cameras or tablet computers, may comprise a plurality of cameras with increasing megapixel counts and requirements for dynamic range. In terms of video, also framerates and resolution are increasing. Images, that may be still or video images, may be captured by a mobile device even without user necessarily even knowing it. This may be for example to allow for better computational enhancements. Further, as a size of a display used for rendering the media content has been increasing as well, the demand for high-quality visual media content has also been increasing. Additionally, spatial audio capture is becoming common for example on high-end mobile devices and the multiple microphones used to capture spatial audio content means more channels for same length of audio track, which naturally increases the amount of data. Head tracked spatial audio with use of advanced headphones and earbuds is also becoming a default choice for the early adopters. Standards, such as 3GPP Immersive Voice and Audio Services, IVAS, and MPEG-I 6 Degrees of Freedom, DoF, Audio, will enable the use of spatial audio in various use cases such as in mobile telephony and augmented reality, AR.

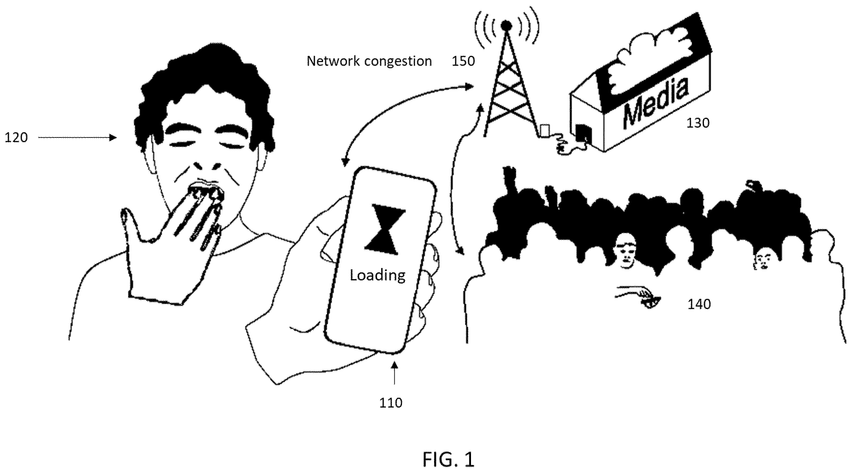

Storing media content, such as audio-visual content, requires lot of space as the quality and amount of media content to be stored increases. Local storage on mobile devices may not be able to keep up with more and more higher-quality audio-visual content that users record themselves or receive from others. To address this issue, the media content may be stored on cloud instead of the local device, such as a mobile device, thus freeing local storage. FIG. 1 illustrates an exemplary embodiment in which a user 120 wishes to retrieve media content stored on cloud service 130 over a network connection 150 to his mobile device 110. However, as there is a crowd of other users 140 present nearby, the network experiences congestion which affects the duration the retrieval of the media content from the cloud service 130 such that the time it takes to retrieve the content is experienced as long. Thus, the media content may not be readily available at the moment the user 120 wishes to access it or there may even be a disruption of service for the cloud service 130 access or loss of network connection 150. And thus, it seems a more efficient way for a user to use and interact with locally stored content and content stored in cloud service 130 would be beneficial.

For example, a user 120 may have been on a holiday and at the holiday destination has recorded a nice spatial audio experience. The user 120 uses a single mobile device 110 that is running low on its local storage. Some time has already passed since the user 120 last rendered the locally stored recordings from his holiday. However, the user 120 would now like to listen to the stored content he recorded during his holiday. As he had not listened to this recording in quite some time, the recording has been simplified such that the recording begins at low-quality, for example as mono only. It is then determined by the mobile device 110 if there is bandwidth available from the cloud 130 and begins to improve the content if there is. This improvement may be based, for example, on a slicing approach, in which key differences between the recorded content and the simplified version are identified and these differences are then packetized for transmission as needed. The slices may be, for example, improvement slices that are added to the simplified content or replacement slices that replace at least a part of the simplified content. For example, there may first be just some background noise and the voice of the user 120 in the recording. Audio improvements may not necessarily be transmitted for this segment. Rather, it may be determined that soon there will be audio sources that are not part of the simplified content or that are poorly represented in the simplified content. For example, birds singing may be such an audio source and it may be determined to use the bandwidth to transmit the bird sounds as objects, and as the user 120 listens to the content they will hear the birds. Also, the mono background also becomes first-order Ambisonic (FOA) and the user 120 becomes even more immersed in the content. As more of the content is retrieved and buffered from the cloud 130, the user 120 may eventually be rendered the original object-based audio scene. The slices for the first part of this content may also be transmitted, so that if the user 120 begins again from the start, the user 120 will hear that part at its best possible quality as well.

A mobile device 110 may comprise a plurality of applications, such as a photo application or a recording application or an application the user 120 may use to create media content, such as audio-visual content, that require local storage to store media content. In some exemplary embodiments the applications or services that store media content on the local storage of the mobile device 110 may also have a corresponding cloud service 130. If a pre-determined simplification threshold is exceeded, then the stored media content may be simplified to a format that requires less storage space thereby saving the storage resource of the mobile device. Simplifying, may be understood as destructive editing of the media content or stripping off layers of scalable content. In other words, the simplifying will lose data, yet the simplifying should not lead to the user 120 inadvertently losing some media content. A reversal of the simplification, in other words the retrieval of the data lost, may be considered as refreshing.

When determining if the pre-determined threshold for simplifying has been exceeded, one condition may be that the media content has been uploaded to the associated cloud service 130. Alternatively, or additionally, a permission from a user 120 may be required. The user 120 may give such permission using any suitable user input method for example. This way, it may be ensured that the original content is stored with full quality. By having the content on cloud service 130, the local copy may be considered redundant from data preservation point of view. On the other hand, the user 120 may also create backup manually by copying data to their own computer/server. It is to be noted though that in some exemplary embodiment the user 120 may provide user input that indicates if a media content is such that simplifying is not allowed. Thus, a condition may be associated with the threshold for simplifying such that determining the threshold to be exceeded requires that the condition is met.

For audio-visual media content the simplification may be performed for example in one or more of the following manners:
- Photo or video resolution down-sampling
- Removing live content from so-called live photos
- Reducing a 360-degree video to a regular fixed viewport video
- Transforming 3D photos/videos to corresponding 2D representations
- Reducing audio sampling frequency and/or bit depth
- Dropping layers from embedded scalable content
- Dropping certain high-resolution components, for example, reducing orders of Ambisonics audio. As an example, a 4th order Ambisonics may be down-sampled to first-order Ambisonic (FOA) thereby reducing the component channel count from 25 to 4 saving more than 80% of file size.
- Down-mixing spatial audio content by transforming it to an audio format that takes less space, for example down-mixing multiple audio objects into metadata-assisted spatial audio (MASA) or first-order Ambisonic (FOA)
- Down-mixing spatial to stereo and stereo to mono audio
- Removing of content components, for example audio objects that are determined as less important such as audio objects relating to ambience.
- Lossless encoding of unencoded "raw" data
- Lossy encoding of losslessly encoded or unencoded data
- Re-encoding using a higher compression rate, or changing to more efficient codec

Some media contents may have a temporal duration, such as video and audio. For media content that has a temporal duration the amount of simplifying, that is, simplification-level, may change over time. When the user 120 then selects media content, that has been simplified, to be rendered, the mobile device may first render the simplified content stored in it locally. If the user views this same content again, it may then be rendered using a higher-quality version that has been retrieved. In other words, the media content may be refreshed and the refreshed media content may be rendered. Yet, if the user 120 does not view the content again, e.g., within a certain time period, the media content may be simplified again. Alternatively, or additionally, when viewing the simplified media content, the user 120 may be prompted to select whether the user wants the higher-quality content to be downloaded, or there may be background process making the higher-quality content available while user is viewing it.

The pre-determined threshold regarding simplifying media content may be a time-related threshold. The time-related threshold may comprise as the threshold the age of the media content. The age of the media content may be for example time since the media content has been added to the mobile device 110, time since the media content has been added to user account / service, or time since the media content has been edited by the user 120. Alternatively, or in addition, time may be time since the media content has been last accessed, rendered, listened to or otherwise used. Thus, the mobile device 110 may track at least one time metadata relating to the media content, and at least partly based on this time metadata, the mobile device may determine when to enter a simplification process for the said media content, and how to simplify the said media content. It is to be noted that the determination may also be as a response to an indication received, from the related cloud service 130 or as a user input, indicating that the simplification threshold has been exceeded.

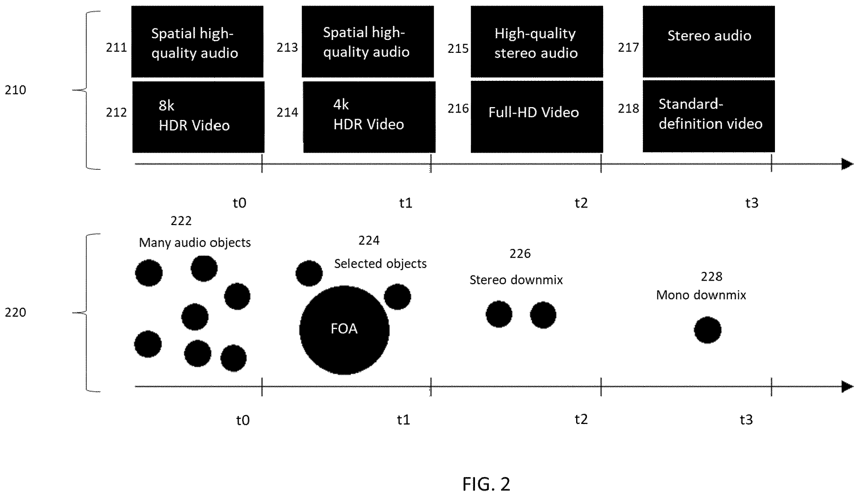

Figure 2 illustrates an exemplary embodiment of media content simplification when the threshold is a time-related threshold. In part 210, characteristics of the media content to be simplified are illustrated. The media content in this exemplary embodiment is audio-visual media content. First, before time t0, the media content is created by a user 120 and its characteristics are spatial high-quality audio 211 and 8k HDR video 212. After the media content has been uploaded to a cloud service 130, the mobile device begins to simplify the original content over time in order to reduce the file sizes on the local mobile device 110. First by the time t1, the 8k HDR video is first down-sampled to 4k HDR video 214, while the audio 213 is left in original form as it takes less space than video. Next both video 216 and audio 215 are further down-sampled by the time t2 until by the time t3 the media content is simplified to stereo audio 217 and standard-definition video 218. In part 220 an exemplary embodiment of media content comprising only audio is illustrated. At t0, the media content comprises a spatial audio scene 222 comprising of multiple audio objects. The mobile device 110 then begins the simplification process and by t1, the spatial audio has been down-sampled by selecting a few key objects 224 that are left untouched and down-sampling the rest of the objects into a first-order Ambisonic (FOA) bed signal. By t2, a stereo down-mix 226 only is available and by t4 the media content comprises only mono down-mix 228.

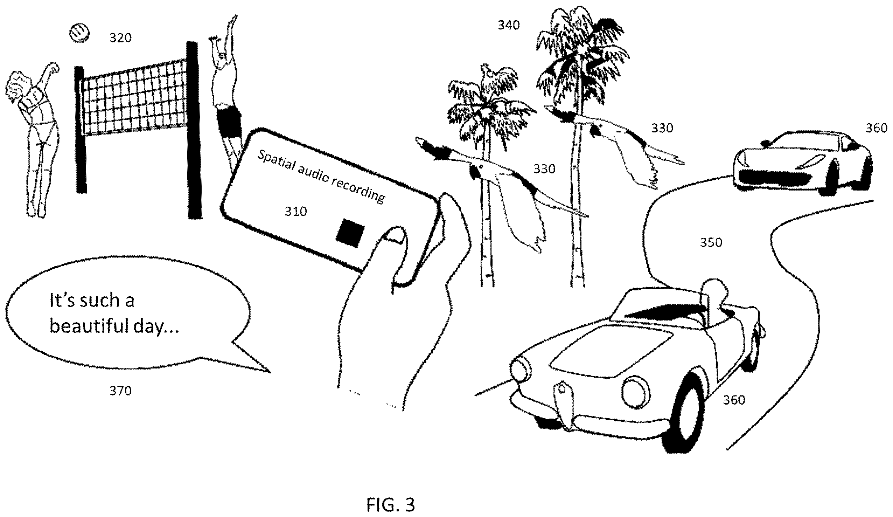

Figure 3 illustrates an exemplary embodiment in which a user, using his mobile device 310, records a spatial audio experience. For example, the user may be walking next to a beach. The user starts the spatial audio recording on his mobile device 310, and the mobile device 310 captures the audio around itself. There are many sound sources in the environment and thus the recording comprises multiple sound objects representing the captured sound sources. For example, there is beach volley game 320 on the beach. Birds 330 are flying around and making noises in the trees 340. There is some traffic on the road 350 with sportscars 360 slowly driving by. The user explains (user voice 370) how the experience is like, how the day is sunny and beautiful, and what the user sees and plans to do.

The spatial audio may be captured in various ways. For example, the mobile device 310 may be a multi-microphone device and utilize parametric spatial audio capture. Such capture could be based on, for example, metadata-assisted spatial audio (MASA) format. Other examples of spatial audio capture and representation may comprise object-based audio and Ambisonics, such as first-order Ambisonics (FOA).

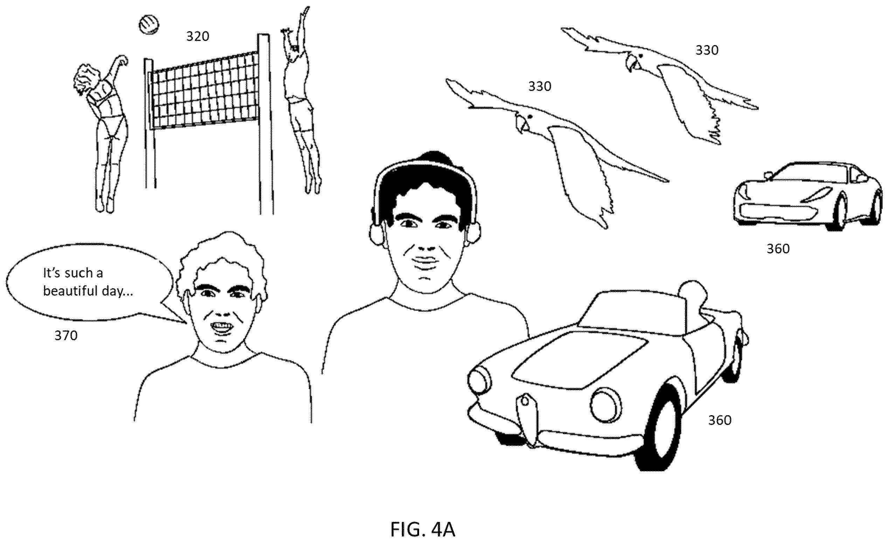

FIG. 4A-4E illustrate how the media content captured in the exemplary embodiment illustrated in FIG. 3 may be simplified, in other words, the quality of the sound objects is reduced. In FIG. 4A the first simplification is performed based on determining that a first threshold for simplifying has been exceeded. This may be for example if a pre-determined amount of time has passed and optionally, if it is determined that the user has not prevented the simplifying. The spatial audio comprised in the recorded media content remains stored in the mobile device 310 at its highest-quality setting, i.e., no simplification has been applied. In some exemplary embodiments, the spatial audio may be available to the user before synchronizing with a cloud service. The spatial audio may be for example object-based audio and the audio objects and their metadata may have been encoded at very high bit rate, essentially at least approaching transparency or the compression may even be lossless. For example, the user may hear the user's own voice 370 in a first direction, the voices and other sounds from beach volley game 320 in another direction, noises made by birds 330 flying above, and the distinct engine and exhaust noises of the sportscars 360 driving by. Additionally, as the spatial audio is object-based audio, the positions or volume levels of individual audio objects may be edited by the user.

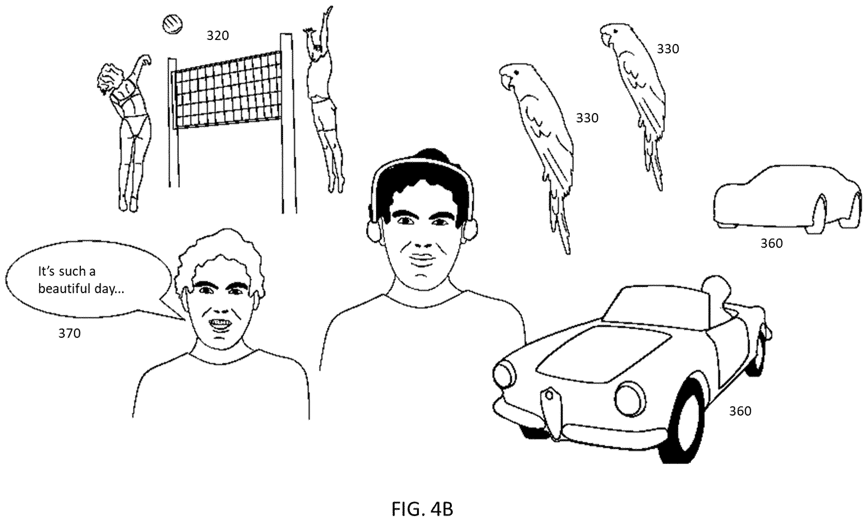

FIG. 4B illustrates an exemplary embodiment of the next simplifying that is performed as a second threshold regarding simplifying is determined to have been exceeded. In this exemplary embodiment the mobile device 310 may have obtained, by determining or receiving for example, information regarding the relative importance of one or more of the audio sources which allows to prioritize the more important audio objects when simplifying. For example, most important audio objects may be maintained in their original form. On the other hand, higher compression or down-mixing or format transformation such as, to metadata-assisted spatial audio (MASA) or first-order Ambisonics (FOA) may be applied to the less important audio objects, such as some distant background audio. In this simplifying the audio quality of the user voice 370 remains unchanged and this audio object is still controllable by the user, while some other audio objects may become more vague, their positional information may be changed, and so on. In general, the audio sources remain close to their original spatial properties and quality. However, fewer audio sources may be available for user control. The overall experience is generally very close to the original, non-simplified capture representation, at least in terms of audio quality and its immersion.

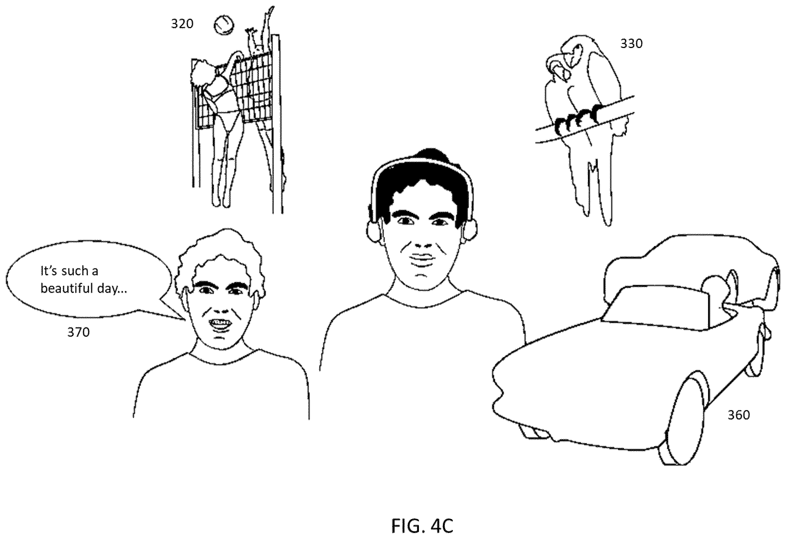

FIG. 4C illustrates an exemplary embodiment of the next simplifying that is performed as a third threshold regarding simplifying is determined to have been exceeded. In this exemplary embodiment yet more simplification is applied to the recorded media content by the mobile device 310. More audio objects are down-mixed together or transformed to another audio format. The spatial positions become more difficult to follow or localize exactly. For example, audio objects relating to a certain audio event may be down-mixed together. The media content becomes less nuanced, however, very few audio objects are removed completely. In case an audio object has been prioritized, that audio object may still be transparent and maintains full user control, such as the user voice 370. However, there are very few other audio objects that maintain full user control. For example, if some audio objects, such as the birds 330 are down-mixed together, and an individual bird may no longer be moved to a different spatial position in the recorded media content by the user.

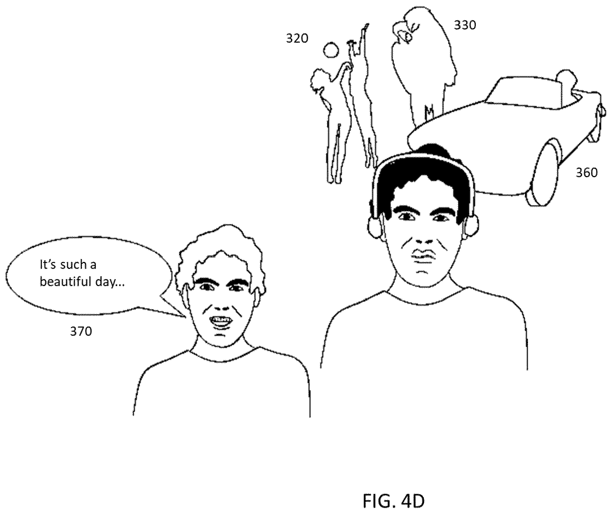

FIG. 4D illustrates an exemplary embodiment of the next simplifying that is performed as a fourth threshold regarding simplifying is determined to have been exceeded. This exemplary embodiment may correspond to a fairly significant simplification. For example, the mobile device 310 may have used the prioritization information to maintain one or more audio objects such that those are not compressed, at least not significantly, and has down-mixed other audio objects a single spatial or non-spatial representation of audio. Some audio sources have been removed or become at least substantially inaudible during the down-mixing. Limited user control may be available. For example, a user may be able to change the position of the prioritized audio object or control the balance between the main audio source and the background ambience, which in this case may comprise sounds of the beach volley game 320, the birds 330 and the sportscars 360.

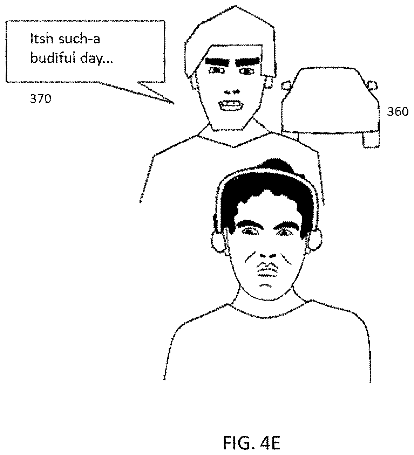

FIG. 4E illustrates an exemplary embodiment of the next simplifying that is performed as a fifth threshold regarding simplifying is determined to have been exceeded. This exemplary embodiment may correspond to a final stage of the simplifying of the recorded media content that is stored in the mobile device 310. In this exemplary embodiment, the audio is not spatial anymore. The spatial audio has been simplified by dropping audio sources and down-mixing to a single mono stream. This mono stream may be highly compressed by for example using Adaptive Multi-Rate - Wide-Band (AMR-WB) codec at fairly low bit rate, even to the point that intelligibility may be affected. The single mono stream may be limited to a single audio source, to the user voice 370 in this exemplary embodiment, or there may be some background ambience audible for example when the user is not talking. In this exemplary embodiment, some of the more prominent noise of the sportcars 360 is at least somewhat audible. All other audio objects have been removed.

In addition to simplifying based on time related simplifying threshold, additionally or alternatively, the simplifying threshold may be related to contextual information of the media content that is locally stored in a mobile device 310. For example, when new media content is obtained by the mobile device, the mobile device estimates the frequency of accessing/using this media content, or the likelihood of accessing/using this media content. Thus, the mobile device builds a contextual model of the media content usage by a user and allocates at least one metadata parameter to the media content. The metadata parameter indicates, e.g., a weight value for simplification. For example, the user may watch cat videos or cat photos often meaning that media content comprising a cat is often rendered. However, the user is less likely to watch videos or images of cars and thus media content comprising a car is less frequently rendered. Based on the contextual information obtained, the mobile device may determine that media content comprising cars is less frequently rendered than media content comprising cats and thus the media content with cars is to be simplified before media content with cats. In general, based on determined contextual information associated with media content, the media content may be prioritized in terms of simplifying such that the higher the priority, the later the media content is simplified.

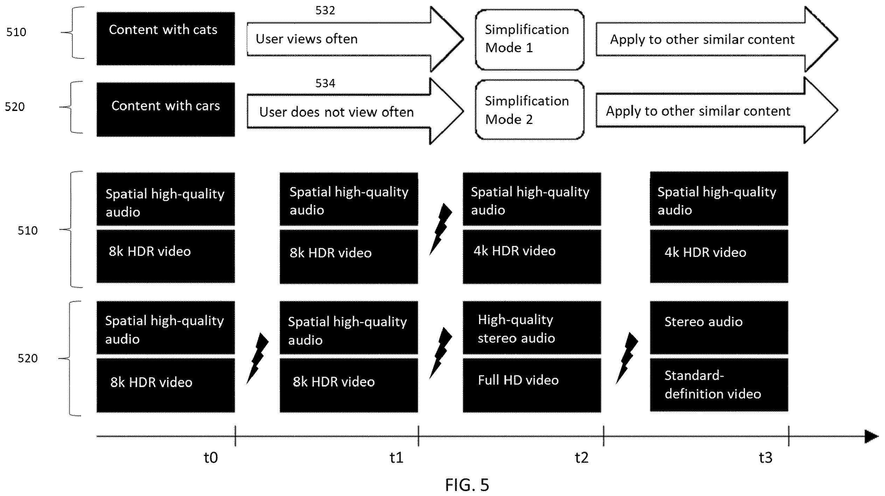

FIG. 5 illustrates an exemplary embodiment of simplifying based on a threshold regarding context of a media content in addition to time. The media content 510 is determined, based on its contextual information, to have higher priority 532 than the media content 520 which has contextual information determined to have a lower priority 534. Media content 510 in this exemplary embodiment comprises cats and media content 520 comprises, in this exemplary embodiment, cars. The media content 510 and 520 are stored locally in a mobile device. By the time t0, both media contents are stored with spatial high-quality audio and 8k HDR video. Yet, after the first threshold regarding time is achieved by t1, the media content 520 is simplified due to its lower priority 534 than the media content 510, which is not simplified. By t1, the media content 520 is stored with spatial high-quality audio and 4k HDR video. As a second threshold regarding time, t2, is achieved, both media contents 510 and 520 are simplified although due to its lower priority 534, the media content 520 is simplified more. The media content 510 is now stored with spatial high-quality audio and 4k HDR video while the media content 520 is stored with high-quality stereo audio and full-HD video. By time related threshold t3, the media content 520 is simplified further while the media content 510 is not simplified further due to its higher priority 532. The media content 520 is now stored with stereo audio and standard definition video. Thus, for the media content 510 with higher priority based on its contextual information, the simplification process may overall be slower, e.g., the step size between two simplification times instances may be larger. It is also to be noted that that other media content having the same priority as media content 510 or 520 may be simplified in a corresponding manner.

If the mobile device is then to render simplified media content, as a response to a user input for example, the mobile device may prompt a query to the user regarding if the user is willing to wait for the higher-quality version to be retrieved or go directly to the simplified, lower-quality version that is available on the mobile device.

In some exemplary embodiments, the terminal device may perform contextual refreshing for simplified media content. In such exemplary embodiments, the media content is associated with contextual information such as at least one metadata parameter describing a group to which it belongs, or for example a multi-dimensional vector describing its various properties, or a number of key words, or any other suitable contextual information. This allows the mobile device to find other media content based on properties of the media content.

For example, as it is determined that the priority of media content comprising a cat is higher than that of media content comprising a car, media content comprising a cat that is highly simplified, will be obtained available to the user in a better version before obtaining a less simplified version of the media content comprising a car. Further, in this exemplary embodiment, the mobile device applies similar refreshing to contextually relevant other media content that the user is not accessing. For example, videos and photos from the same location as the cat video and/or other cat videos. This way, there is readily available high-quality versions of content the user is more likely to access next in the mobile device for the user to access.

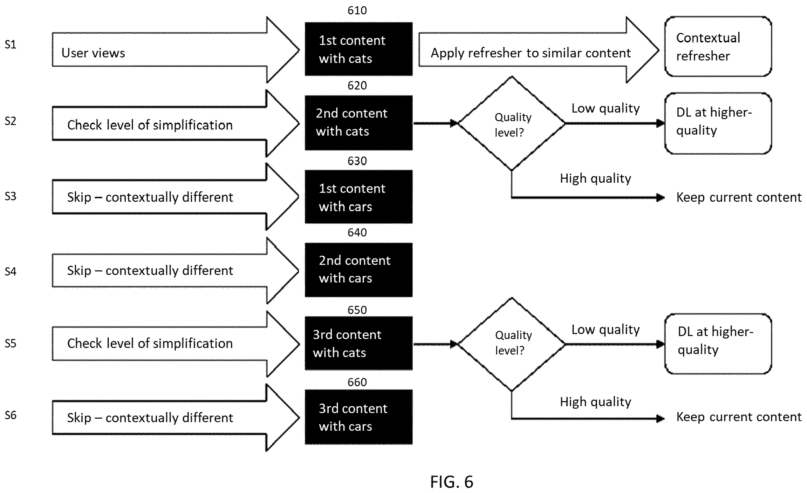

FIG. 6 illustrates an exemplary embodiment of contextual refreshing, in other words, obtaining a higher-quality version, of media content. In S1, a mobile device renders for the user to view media content 610 with cats and it is determined that contextual refreshing of media content is to be applied to media content that, according to a predetermined criterion for example, may be determined to be contextually same. Next, in S2, media content 620 that also comprises a cat is determined to be contextually similar to the media content 610 and its level of simplifying is determined. If the level of simplifying is of low-quality, then the media content 620 is refreshed, in other words obtained in a higher-quality. In S3 media content 630 is determined, based on its context, to be contextually different as it comprises a car and thus it is not refreshed. In S4 media content 640 is also determined to be contextually different as it comprises a car as well and thus the media content 640 is not refreshed. In S5, media content 650 that comprises a cat is determined to be contextually similar to media content 610 and thus its level of simplifying is determined. If the level of simplifying is such that the media content 650 is of low-quality, the media content 650 is refreshed. In S6 the media content 660 comprises cars and is thus determined to be contextually different from the media content 610 and thereby is not refreshed.

The contextual refreshing may be temporary meaning that the mobile device may store the lower-quality, simplified version of a media content in addition to downloading the high-quality media content that has not been simplified. If the user does not access the corresponding media content, e.g., user closes the application, this temporary refreshed content may be removed. Alternatively, instead of being temporary, the contextual refreshing may simply reset media content. In other words, the high-quality content will replace the low-quality media content, and, e.g., the age of content, as described above, is reset. This may be the case for example when the user accesses the media content.

In another exemplary embodiment, storage space on the user's various connected devices may be utilized to distribute higher-quality content locally where most suitable. This enables better access for the user to high-quality content for example when there is no network coverage or there is cloud service outage. Each of user's devices has a certain free storage space or amount of storage space allocated for media content. In addition, each of user's devices has a certain usage profile that may relate, e.g., to the device capabilities.

For example, the user may mostly watch videos on a tablet computer, while the user may mostly browse photos on a phone, and listen to audio recordings from a smartwatch. Thus, when media content is simplified, the usage profile associated with the device, and optionally also the SW and/HW capability of the device, may be taken into account such that higher-quality video content is stored on the tablet, high-quality photos on the phone, and high-quality audio content on the smartwatch for example. It is to be noted that different users may have different using habit and therefore devices associated with other users may also have different usage profiles associate with them.

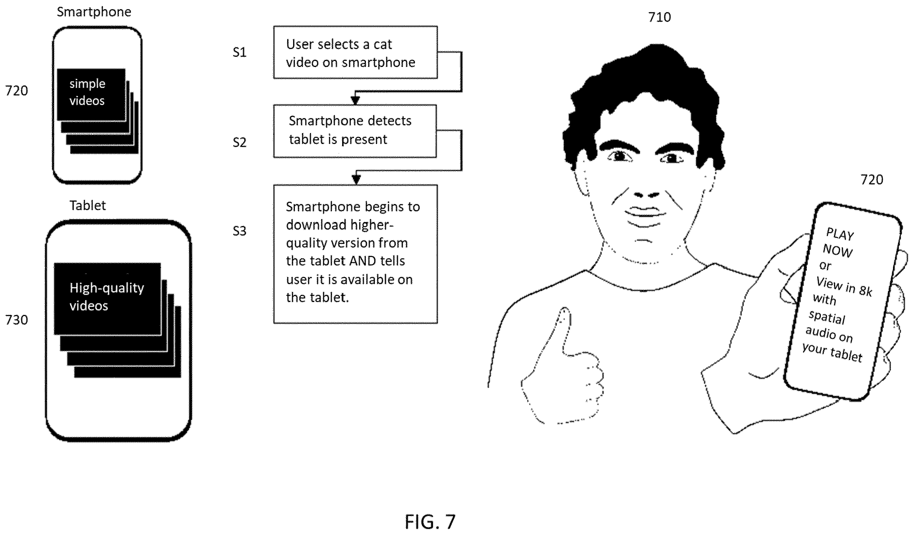

FIG. 7 illustrates an exemplary embodiment of distributed content for content simplification purposes. As, in S1, the user 710 accesses media content, e.g., a cat video on their phone 720, only a low-quality version of the media content may be available for content simplification reasons. However, a high-quality version of the same media content may be available on a tablet 730 that is associated with the phone 720. As the mobile devices, the phone 720 and tablet 730 are associated, in S2 the phone 720 determines that a higher quality version of the media content is available for streaming from the tablet 730. Alternatively, or additionally, the phone 720 may indicate to the user 710 that the high-quality version is available on the tablet 730 and may suggest the user watches the media content at higher quality from that device. In this exemplary embodiment, in S3, the phone 720 begins to download the higher quality media content from the tablet 730 and also indicates to the user that the higher quality media content is available on the tablet 730. It may be faster to stream the media content from the tablet 730 to the phone 720 than from cloud to phone.

As it is determined that a simplified media content is to be refreshed, due to the user 710 selecting the content for rendering for example, the user may be prompted with one or more options indicating levels of higher-quality content as it may be slow to download a high-quality content from the cloud. Thus, in some exemplary embodiments, a higher-quality version of the media content may be retrieved by slicing the difference between the previously simplified and the original, high-quality media content and by retrieving this difference signal. When the media content is simplified, and the mobile device 720 may synchronize with the cloud, information, for example metadata, may be provided from the mobile device 720 to the cloud indicating what type of simplifying was performed on the local device. Thus, the cloud service may also know what version of the content is available on the local mobile device 720 and the cloud service may be able to replicate said simplified media content without transmitting the simplified content itself.

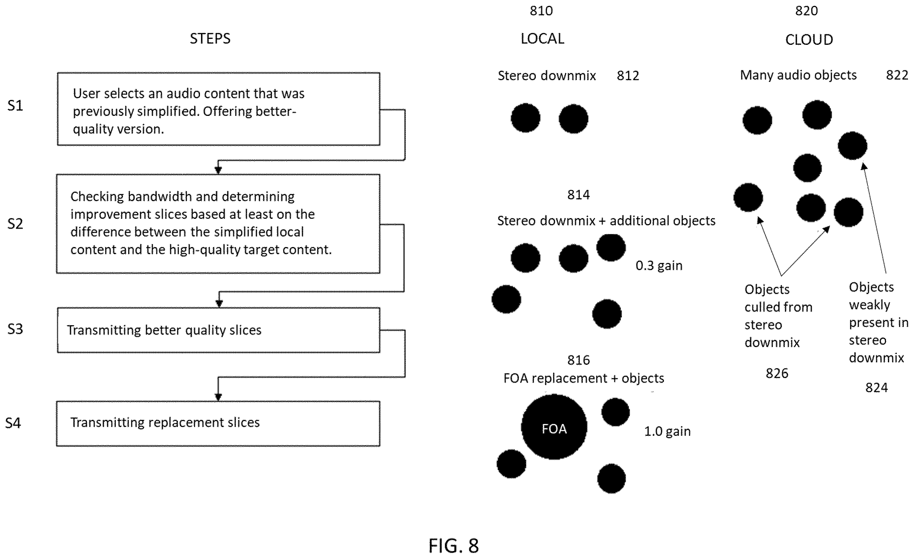

FIG. 8 illustrates an exemplary embodiment of fast retrieval of a higher-quality version of the media content. In this exemplary embodiment, the difference between the simplified version of the media content stored on the mobile device and the desired higher-quality version of the media content, such as the original content, are analyzed. Elements of the media content that may provide improvement over a simplified version of the media content may be identified. This may also be called as slicing. By using the simplified version of the media content as a basis, and the elements, that may be called as slices, may be provided for fast retrieval. An advantage may be that these slices are much smaller than the whole higher-quality media content and their transmission may be prioritized. As the elements are quicker to download, e.g., in case of a content streaming, they may be made available faster or they may improve the quality of the "live" stream with lower channel bandwidth. The slices may be added to the simplified version of the media content or they may replace at least one part of the simplified content. In some exemplary embodiment, a slice may first be added to the simplified version of the media content using a first gain and later on used with a second gain. An example is discussed below.

In S1 of the FIG. 8 a user selects on a mobile device, that is a local mobile device 810, a media content for rendering. The media content in this exemplary embodiment is audio content that is stored in the mobile device 810 as a simplified version. The audio, in the simplified version, is a stereo down-mix 812. In cloud 820, the elements that provide improvements to the media content, the slices 822, are stored and are retrievable for the mobile device 810. For example, an element providing improvement for the simplified stereo down-mix 812, that is a down-mix of a spatial audio scene, may comprise:
- Objects that were culled from the stereo down-mix 826. These may be added to the stereo down-mix 812.
- Objects that are part of the stereo down-mix but hard to hear 824. These may be added to the stereo down-mix with a first gain, for example with a gain smaller than 1.0. After the stereo down-mix is replaced by FOA, the gain may be increased to a second gain, for example 1.0.
- First-order Ambisonics (FOA) that replaces a stereo down-mix
- Higher-order Ambisonics HOA component signals that are added to FOA
- Objects that replace the HOA/FOA representation

In this exemplary embodiment, in S2, the bandwidth available for downloading to the mobile device 810 from the cloud 820 is determined and based on the bandwidth available, the improvement slices to be downloaded are determined and in S3 downloaded. After this, in S4, the replacement slices are downloaded from the cloud 820 to the mobile device 810. In this exemplary embodiment, the stereo down-mix 812 is first improved with additional objects 814 with a first gain. Then the first-order Ambisonics (FOA) replacement and additional objects 816 with a second gain 826 are obtained.

In addition, other methods, such as retrieving improvement layers of embedded scalable content independently of the underlying base layers may be used. In one exemplary embodiment, the slicing operation relates to audio content when viewing, e.g., a movie. The simplified version stored locally on a mobile device may be for example a lower resolution video with mono audio only. If a first segment in the original content has predominantly speech only, the mono audio may be quite sufficient. On the other hand, if shortly after that there will be a complex audio scene with music, it is more important to provide more spatial elements during that segment. Thus, the slicing operation may determine that no improvement is sent for the speech segment and significantly more improvement is sent for the more complex segment. Thus, the overall quality of experience may quickly be improved when it matters.

In yet another exemplary embodiment, higher-quality videos may be stored on a tablet with larger high-resolution display than on smartphone associated with the tablet. In this exemplary embodiment, the device capability may be taken into account when carrying out a slicing operation for fast retrieval of higher-quality content. The user may for example utilize their smartphone to beam a video to a television set with home theatre speaker system. While simple stereo audio could be sufficient for the smartphone, it may be determined that the beaming requires better audio and improvements should be sliced and transmitted to the smartphone due to the availability of the external speaker system.

The exemplary embodiments described above describe improvement to representation of media content such as audio-visual content, storage optimization regarding storing media content, and related user experiences. The exemplary embodiments described above have an advantage of simplifying media content to save local storage space and yet allow for refreshing of previously simplified media content to provide high-quality experience for user, and smart retrieval of higher-quality content to facilitate the good experiences under challenging channel conditions. The exemplary embodiments described above enhance user experience by making sure that user's media content can always and speedily be available at high-quality. While cloud is used to provide backup and store the high-quality versions of user's various media contents, a user does not have to rely on cloud to access most important and most relevant content.

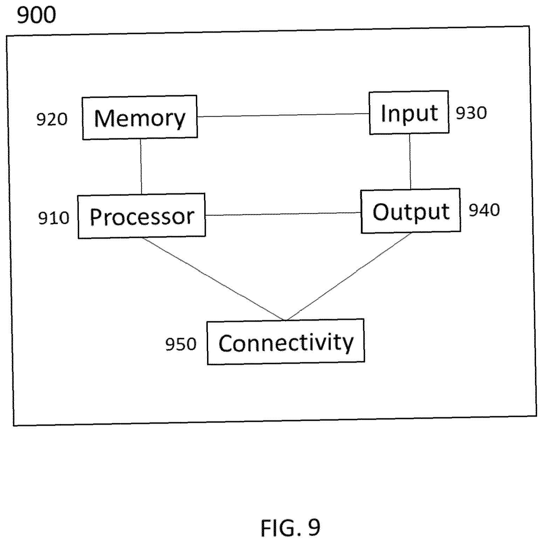

FIG. 9 illustrates an exemplary embodiment of an apparatus 900, which may be or may be comprised in a device such as a mobile device, according to an example embodiment. The apparatus 900 comprises a processor 910. The processor 910 interprets computer program instructions and process data. The processor 910 may comprise one or more programmable processors. The processor 910 may comprise programmable hardware with embedded firmware and may, alternatively or additionally, comprise one or more application specific integrated circuits, ASICs.

The processor 910 is coupled to a memory 920. The processor is configured to read and write data to and from the memory 920. The memory 920 may comprise one or more memory units. The memory units may be volatile or non-volatile. It is to be noted that in some example embodiments there may be one or more units of non-volatile memory and one or more units of volatile memory or, alternatively, one or more units of non-volatile memory, or, alternatively, one or more units of volatile memory. Volatile memory may be for example RAM, DRAM or SDRAM. Non-volatile memory may be for example ROM, PROM, EEPROM, flash memory, optical storage or magnetic storage. In general, memories may be referred to as non-transitory computer readable media. The memory 920 stores computer readable instructions that are execute by the processor 910. For example, non-volatile memory stores the computer readable instructions and the processor 910 executes the instructions using volatile memory for temporary storage of data and/or instructions.

The computer readable instructions may have been pre-stored to the memory 920 or, alternatively or additionally, they may be received, by the apparatus, via electromagnetic carrier signal and/or may be copied from a physical entity such as computer program product. Execution of the computer readable instructions causes the apparatus 900 to perform functionality described above.

In the context of this document, a "memory" or "computer-readable media" may be any non-transitory media or means that can contain, store, communicate, propagate or transport the instructions for use by or in connection with an instruction execution system, apparatus, or device, such as a computer.

The apparatus 900 further comprises, or is connected to, an input unit 930. The input unit 930 comprises one or more interfaces for receiving a user input. The one or more interfaces may comprise for example one or more motion and/or orientation sensors, one or more cameras, one or more accelerometers, one or more microphones, one or more buttons and one or more touch detection units. Further, the input unit 930 may comprise an interface to which external devices may connect to.

The apparatus 900 also comprises an output unit 940. The output unit comprises or is connected to one or more displays capable of rendering visual content such as a light emitting diode, LED, display, a liquid crystal display, LCD and a liquid crystal on silicon, LCoS, display. The output unit 940 further comprises one or more audio outputs. The one or more audio outputs may be for example loudspeakers or a set of headphones.

The apparatus 900 may further comprise a connectivity unit 950. The connectivity unit 950 enables wired and/or wireless connectivity to external networks. The connectivity unit 950 may comprise one or more antennas and one or more receivers that may be integrated to the apparatus 900 or the apparatus 900 may be connected to. The connectivity unit 950 may comprise an integrated circuit or a set of integrated circuits that provide the wireless communication capability for the apparatus 900. Alternatively, the wireless connectivity may be a hardwired application specific integrated circuit, ASIC.

It is to be noted that the apparatus 900 may further comprise various component not illustrated in the Figure 9. The various components may be hardware component and/or software components.

Example embodiments described herein may be implemented using software, hardware, application logic or a combination of them. Also, if desired, different functionalities discussed herein may be performed in a different order, some functionalities may be performed concurrently, and, if desired, some of the above-mentioned functionalities may be combined. Although various aspects of the invention are set out in the independent claims, other aspects of the invention comprise other combinations of features from the described embodiments and/or dependent claims with features of the independent claims and not solely the combinations explicitly set out in the claims.

It will be appreciated that the above described example embodiments are purely illustrative and are not limiting on the scope of the invention. Other variations and modifications will be apparent to persons skilled in the art upon reading the present specification.

Moreover, the disclosure of the present application should be understood to include any novel features or any novel combination of features either explicitly or implicitly disclosed herein or any generalization thereof and during the prosecution of the present application or of any application derived therefrom, new claims may be formulated to cover any such features and/or combination of such features.

## Claims

1. An apparatus comprising means for:
storing a media content on a storage of a device;
determining that a threshold regarding simplifying the media content has been exceeded;
simplifying the media content such that data is lost from the storage of the device and a low-quality version of the media content is stored;
rendering the low-quality version of the media content; and
refreshing the low-quality version of the media content to obtain a higher-quality version of the media content.

2. An apparatus according to claim 1, wherein the threshold is a time-related threshold and/or the threshold relates to contextual information of the media content.

3. An apparatus according to claim 1 or 2, wherein the media content comprises spatial audio comprising a plurality of audio objects and the apparatus further comprises means for prioritizing the audio objects and simplifying a subset of the audio objects based on the prioritization.

4. An apparatus according to any previous claim, wherein the media content comprises video content.

5. An apparatus according to any previous claim, wherein refreshing the low-quality version of the media content comprises obtaining, from a cloud service, one or more elements providing improvement over the low-quality version of the media content.

6. An apparatus according to claim 5, wherein the one or more elements is an improvement element or a replacement element.

7. An apparatus according to any previous claim, wherein the apparatus further comprises means for refreshing another media content that is determined to the be similar to the media content.

8. An apparatus according to any previous claim, wherein the apparatus further comprises means for indicating that the higher-quality version of the low-quality version of the media content is available on another device that is associated with the device.

9. An apparatus according to any previous claim, wherein the threshold is associated with a condition such that determining the threshold to be exceeded requires that the condition is met.

10. An apparatus according to any previous claim, wherein the apparatus is comprised in the device.

11. A method comprising:
storing a media content on a storage of a device;
determining that a threshold regarding simplifying the media content has been exceeded;
simplifying the media content such that data is lost from the storage of the device and a low-quality version of the media content is stored;
rendering the low-quality version of the media content; and
refreshing the low-quality version of the media content to obtain a higher-quality version of the media content.

12. A method according to claim 11, wherein the threshold is a time-related threshold and/or the threshold relates to contextual information of the media content.

13. A method according to claim 11 or 12, wherein refreshing the low-quality version of the media content comprises obtaining, from a cloud service, one or more elements providing improvement over the low-quality version of the media content.

14. A method according to any of claims 11 to 13, wherein the method further comprises means for refreshing another media content that is determined to the be similar to the media content.

15. A computer program comprising instructions for causing an apparatus to perform at least the following:
store a media content on a storage of a device;
determine that a threshold regarding simplifying the media content has been exceeded;
simplify the media content such that data is lost from the storage of the device and a low-quality version of the media content is stored;
render the low-quality version of the media content; and
refresh the low-quality version of the media content to obtain a higher-quality version of the media content.
